(19) Europäisches Patentamt / European Patent Office / Office européen des brevets

(11) **EP 4 520 622 A1**

(12) **EUROPEAN PATENT APPLICATION**
published in accordance with Art. 153(4) EPC

(43) Date of publication:
**12.03.2025 Bulletin 2025/11**

(21) Application number: **23925974.0**

(22) Date of filing: **27.09.2023**

(51) International Patent Classification (IPC):
**B61L 23/00** (2006.01)

(52) Cooperative Patent Classification (CPC):
Y02T 10/72

(86) International application number:
**PCT/CN2023/122256**

(87) International publication number:
**WO 2024/183274 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.03.2023 CN 202310196834**

(71) Applicant: **CRSC Research & Design Institute Group Co., Ltd.**
**Beijing 100070 (CN)**

(72) Inventors:
• **WANG, Jia**
  **Beijing 100070 (CN)**
• **WANG, Zhiyu**
  **Beijing 100070 (CN)**
• **GE, Luming**
  **Beijing 100070 (CN)**
• **CHEN, Zhiqiang**
  **Beijing 100070 (CN)**
• **WANG, Qi**
  **Beijing 100070 (CN)**
• **ZHAO, Zhongjia**
  **Beijing 100070 (CN)**
• **WANG, Peng**
  **Beijing 100070 (CN)**

(74) Representative: **Meissner Bolte Partnerschaft mbB**
**Patentanwälte Rechtsanwälte**
**Postfach 86 06 24**
**81633 München (DE)**

(54) **AUTOMATIC TRAIN OPERATION COOPERATIVE CONTROL METHOD AND SYSTEM, AND COMPUTER STORAGE MEDIUM**

(57)  Provided by the present disclosure are a method and system for cooperative control of automatic train operation, and a computer storage medium. The method includes the following steps: setting air brake application and cancellation conditions of a behind vehicle according to a safety distance between a front vehicle and the behind vehicle; setting a corresponding variable time headway model according to speed states and air brake states of the front vehicle and the behind vehicle; determining a difference between an actual vehicle distance and an ideal vehicle distance according to driving data of the front vehicle and the behind vehicle as well as the variable time headway model; determining required acceleration of the behind vehicle when the difference tends to 0; restricting the required acceleration of the behind vehicle by using commanded acceleration; determining acceleration of the behind vehicle under a constraint of an air brake force; when the required acceleration of the behind vehicle is less than the acceleration of the behind vehicle under the constraint of the air brake force, taking the acceleration of the behind vehicle under the constraint of the air brake force as the required acceleration of the behind vehicle; and determining a corresponding traction or brake level according to the required acceleration of the behind vehicle. The selection of appropriate air brake magnitude of the behind vehicle can be achieved, the transportation efficiency is improved, the automatic train operation ability is improved, and the safety of automatic operation is improved.

EP 4 520 622 A1

FIG. 2

## Description

### TECHNCIAL FIELD

The present disclosure relates to the technical field of train control, and in particular to a method and system for cooperative control of automatic train operation, and a computer storage medium.

### BACKGROUND ART

The cooperative control of locomotive automatic operation is an adaptive following control. By collecting the information of the present vehicle and the information of a front vehicle, the conditions such as distance deviation and speed deviation are taken as inputs. The ideal acceleration of the present vehicle is determined through a vehicle cooperative following method, such that the actual acceleration of the present vehicle can change in real time with the expected acceleration value to ensure a reasonable inter-vehicle spacing during the cooperative driving of the front vehicle and the behind vehicle, finally achieving the purpose of improving driving safety. During the cooperative control of locomotives, the stable operation should be maintained between the locomotives, that is, the spacing between the locomotives should always be stabilized within a certain range. However, due to many unstable factors in the external operating conditions of the locomotives (such as ramps, speed restrictions, air brake force restrictions), the stability of the locomotives change constantly change, and the control effect of the locomotives will be affected if the spacing between the locomotives is too large or too small. Excessively large spacing will affect the integrity of locomotive, and excessively small spacing may cause the safety problem such as locomotive collision. Although the modes of lengthening and weighting the train can greatly improve the traffic volume and efficiency, it is more difficult for the crew to operate the train, and the pressure on the crew is prominent. Moreover, excessive length of the train also leads to problems such as the inability to stop at the intermediate station and the difficulty for drivers to manipulate. Although some problems can be alleviated by using wireless synchronous manipulation or the manual synchronous manipulation of the driver, the phenomenon of switch split the derailment occurs from time to time, which puzzles the practical application in the field.

Due to the heavy gravity of the locomotive along the ramp, the locomotive needs to be adjusted by electric traction, electric brake and air brake together during operation. According to the actual control experience of the locomotive, the electric brake cannot effectively control the speed of the locomotive under the conditions of long and steep downhill, so it is necessary to adjust the speed of the locomotive through air brake and electric brake. When the electric brake can meet the brake requirements of the locomotive, the electric brake is preferred to adjust the speed of the main vehicle. When the locomotive needs a large brake force, the electric brake and the air brake are used to adjust the speed of the main vehicle speed at the same time. After the air brake is alleviated by the air brake, the locomotive needs to be charged to meet the condition of applying the air brake to the locomotive again. Therefore, the automatic operation system needs to determine the magnitude of the air brake required in advance. Too much air brake will increase the venting delay of the main vehicle, while too little air brake will lead to too close distance between the front vehicle and the behind vehicle. The brake reduction of the locomotive needs to ensure that the main vehicle keeps a safety distance from the front vehicle under the premise of not stopping in the process of venting and charging. Therefore, it is crucial for the behind vehicle to select the appropriate air brake magnitude.

### SUMMARY

The inventor makes the present disclosure to solve the problem above. A method and system for cooperative control of automatic train operation, and a computer storage medium are provided through specific embodiments.

In a first aspect, an embodiment of the present disclosure provides a method for cooperative control of automatic train operation, including the following steps:

  setting air brake application and cancellation conditions of a behind vehicle according to a safety distance between a front vehicle and the behind vehicle;
  setting a corresponding variable time headway model according to speed states and air brake states of the front vehicle and the behind vehicle;
  determining a difference between an actual vehicle distance and an ideal vehicle distance according to driving data of the front vehicle and the behind vehicle as well as the variable time headway model,
  determining required acceleration of the behind vehicle when the difference tends to 0;
  restricting the required acceleration of the behind vehicle by using commanded acceleration;
  determining required acceleration of the behind vehicle under a minimum air brake force which can ensure deceleration of the behind vehicle when the front vehicle accelerates and the behind vehicle decelerates, and recording the required acceleration as first acceleration;

determining required acceleration of the behind vehicle corresponding to a corresponding minimum air brake under the condition of no collision, and recording the required acceleration as second acceleration;

recording the smaller of the first acceleration and the second acceleration as acceleration of the behind vehicle under a constraint of an air brake force;

when the required acceleration of the behind vehicle is less than the acceleration of the behind vehicle under the constraint of the air brake force, taking the acceleration of the behind vehicle under the constraint of the air brake force as the required acceleration of the behind vehicle; and

determining a corresponding traction or brake level according to the required acceleration of the behind vehicle.

Specifically, an air brake application condition of the behind vehicle is as follows:

the behind vehicle is enabled to start air brake application when an interval between air brake application time of the behind vehicle and previous air brake application time is longer than required charging time of air brake, a speed of the behind vehicle is greater than an irreducible speed, and any of conditions 1, 2 and 3 is met;

condition 1: the front vehicle and the behind vehicle are all in a deceleration state, the front vehicle stops with current deceleration, the behind vehicle stops with a maximum electric brake force, and the behind vehicle stops at a position exceeding the front vehicle;

condition 2: when the front vehicle is in an acceleration state, and the behind vehicle is in a deceleration state, deceleration of the front vehicle is calculated according to the minimum electric brake, the front vehicle and the behind vehicle both stop with the current deceleration, and the behind vehicle stops at a position exceeding the front vehicle; and

condition 3: the sum of a speed of the behind vehicle and a configured speed is greater than a reference speed, where the reference speed is an estimated commanded speed obtained at the end of re-charging of the behind vehicle after venting, and the maximum electric brake cannot offset deceleration caused by ramp and resistance or an increase of an adjustment speed and a charging speed.

Specifically, an air brake cancellation condition of the behind vehicle is as follows:

the sum of the speed of the behind vehicle and the configured speed is less than the reference speed, where the reference speed is an estimated commanded speed obtained at the end of re-charging of the behind vehicle after venting; and

when the sum of an estimated running distance of the behind vehicle during charging, an estimated running distance of the behind vehicle from venting to stopping and a current position of a following vehicle is less than the sum of a position where the front vehicle is located and an overall estimated running distance of the front vehicle until stopping, the air brake of the behind vehicle is canceled.

Specifically, a method for cooperative control of automatic train operation further includes the following steps: when the front vehicle and the behind vehicle are high-speed train sets, the sum of a displacement of the behind vehicle during delay, a displacement of the behind vehicle when the maximum electric brake is applied again and a current position of the behind vehicle is less than the sum of the position where the front vehicle is located and a displacement of the front vehicle until stopping when the minimum electric brake is applied, the acceleration of the behind vehicle can be improved.

Specifically, the setting a corresponding variable time headway model according to speed states of the front vehicle and the behind vehicle and air brake states includes the following steps:

restricting an inter-vehicle time headway by sections according to the air brake application and cancellation conditions, and designing a basic inter-vehicle time headway between the front vehicle and the behind vehicle as $t_1$; when the front vehicle and the behind vehicle are both in a deceleration state, and the behind vehicle is in an air brake canceling state, satisfying that:

$$T_{fb} = ((s_b - s_f) - l_{trainlen} + (fr\_pos\_a - be\_pos\_a)) / v_{behind}$$

, and when $T_{fb}$ does not exceed $t_1$:

an inter-vehicle time headway between the front vehicle and the behind vehicle is

$$T_{fb} = t_1 - ((s_b - s_f) - l_{trainlen} + (fr\_pos\_a - be\_pos\_a)) / v_{behind},$$

where $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, *fr_pos_a and be_posa* are running distances of the front vehicle and the behind vehicle until stopping when the front vehicle and the behind vehicle are both under a deceleration condition, respectively, and $v_{behind}$ is a current speed of the behind vehicle;

when the behind vehicle is in an air brake canceling state, and the front vehicle is in an acceleration state, satisfying that:

$$T_{fb} = ((s_b - s_f)\text{-}l_{trainlen} + (fr\_pos\_b - be\_pos\_b))/v_{behind}$$

, and when $T_{fb}$ does not exceed $t_1$,

the inter-vehicle time headway between the front vehicle and the behind vehicle is:

$$T_{fb} = t_1 \text{-} ((s_b - s_f)\text{-}l_{trainlen} + (fr\_pos\_b - be\_pos\_b))/v_{behind}.$$

where $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, $f_r\_pos\_a$ and *be_posa* are running distances of the front vehicle and the behind vehicle until stopping when the front vehicle and the behind vehicle are both under a deceleration condition, respectively, and $v_{behind}$ is a current speed of the behind vehicle;

when the behind vehicle is in an air brake applying state, satisfying that:

$$T_{fb} = ((s_b - s_f)\text{-}l_{trainlen} + (fr\_pos\_c - be\_pos\_c))/v_{behind}$$

, and when $T_{fb}$ does not exceed $t_1$:

the inter-vehicle time headway between the front vehicle and the behind vehicle is:

$$T_{fb} = t_1 \text{-} ((s_b - s_f)\text{-}l_{trainlen} + (fr\_pos\_c - be\_pos\_c))/v_{behind},$$

where $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, *be_pos_c* is an overall estimated running distance of the behind vehicle in the charging-venting process, *f_r_pos_c* is an overall estimated running distance of the front vehicle until stopping, and $v_{behind}$ is a current speed of the behind vehicle;

when the above conditions are all unsatisfied, reducing the inter-vehicle time headway, and setting the inter-vehicle time headway as $t_2$ in a unified manner; and

when the front vehicle and the behind vehicle are high-speed train sets, designing the basic inter-vehicle time headway between the front vehicle and the behind vehicle as $t_3$, satisfying that:

$$T_{fb} = ((s_b - s_f)\text{-}l_{trainlen} + (fr\_pos\_d - be\_pos\_d))/v_{behind}$$

, and when $T_{fb}$ does not exceed $t_3$;

the inter-vehicle time headway between the front vehicle and the behind vehicle is $T_{fb}=t_3\text{-}((s_b\text{-} s_f)\text{-}l_{trainlen} + (f_r\_pos\_d\text{-}be\_pos\_d))/v_{behind}$, otherwise, reducing the inter-vehicle time headway, that is, setting inter-vehicle time headway as $t_4$ in a unified way.

Specifically, the determining a difference between an actual vehicle distance and an ideal vehicle distance according to driving data of the front vehicle and the behind vehicle and the variable time headway model includes the following steps:

establishing a vehicle cooperative following model based on the driving data of the front vehicle, the driving data of the behind vehicle and the variable time headway model, where a difference between the actual vehicle distance and the ideal vehicle of the front vehicle and the behind vehicle is as follows:

$$\Delta s(t) = s_{real} - d_{safe} = s_f(t) - s_b(t) - T_{fb}v_{behind}(t) - d$$

where $s_{real}$ is an actual distance between the front vehicle and the behind vehicle, $d_{safe}$ is a safety distance between the front vehicle and the behind vehicle, $s_f(t)$ is a current position of the front vehicle at time $t$, $s_b(t)$ is a current position of the behind vehicle at time $t$, $T_{fb}$ is the inter-vehicle time headway between the front vehicle and the behind vehicle, $v_{behind}(t)$ is a current speed of the behind vehicle, and $d$ is a distance between the front vehicle and the behind vehicle at rest, which is generally 450 m.

Specifically, the determining required acceleration of the behind vehicle when the difference tends to 0 includes the following steps:

selecting a sliding mode switching function:

$$Y = \Delta s(t) + \dot{s}_{real}(t) = s_{real}(t) - T_{fb}v_b(t) - d + \dot{s}_{real}(t)$$

where $\Delta s(t)$ is a difference between an actual vehicle distance and an ideal vehicle distance between the front vehicle and the behind vehicle at time $t$, $\dot{s}_{real(t)}$ is a relative speed of the front vehicle and the behind vehicle at time $t$, $s_{real(t)}$ is an actual distance between the behind vehicle and the front vehicle, $T_{fb}$ is the inter-vehicle time headway between the front vehicle and the behind vehicle, $v_b(t)$ is a current speed of the behind vehicle, and $d$ is a distance between the front vehicle and the behind vehicle at rest;
establishing a sliding mode control equation by a constant-speed approaching rate:

$$\dot{Y} + \lambda Y = 0$$

when a sliding mode switching function Y tends to 0, satisfying that the sliding mode control equation is 0, $\Delta s(t)+\dot{s}_{real}(t) \to 0$,
$\dot{Y}$ represents a derivative of Y, $\lambda$ represents an approaching speed; and if $\lambda$ is too small, indicating that the speed approaches to slow; if $\lambda$ is too large, indicating that the approaching speed is fast, and $\lambda$ in this algorithm is 0.2;
substituting the sliding mode switching function into the sliding mode control equation to obtain required acceleration $a_{behind}(t)$ of the behind vehicle as follows:

$$a_{behind}(t) = \frac{1}{T_{fb}+1}\left\{(\lambda+1)\dot{s}_{real(t)} + \lambda(s_{real(t)} - d_{safe(t)}) + a_{front}(t)\right\}$$

in the formula, $a_{behind}(t)$ is acceleration of the behind vehicle calculated according to a vehicle cooperative control algorithm, $T_{fb}$ is the inter-vehicle time headway between the front vehicle and the behind vehicle, $\lambda$ represents the approaching speed when the sliding mode switching function Y tends to 0, $\dot{s}_{real(t)}$ is a relative speed of the front vehicle and the behind vehicle at time $t$, $s_{real(t)}$ is an actual distance between the behind vehicle and the front vehicle at time $t$, $d_{safe(t)}$ is a safety distance between the behind vehicle and the front vehicle, and $a_{front(t)}$ is acceleration of the front vehicle at time $t$.

Specifically, the restricting the required acceleration of the behind vehicle by using commanded acceleration includes the following steps:

restricting the required acceleration of the behind vehicle by using the commanded acceleration, and when the speed of the behind vehicle after delay exceeds the commanded speed, taking $a_{cmdv}$ as the required acceleration of the behind vehicle,

$$a_{cmdv} = \frac{(v_{cmdv} - v_{front})}{t_{delay}}$$

where $v_{cmdv}$ is a commanded speed of the behind vehicle, $v_{front}$ is a speed of the front vehicle, $t_{delay}$ is a delay of the behind vehicle; and the following restrictions are added to prevent the acceleration calculation of the behind vehicle from being too large or too small:

in order to prevent a situation that the behind vehicle cannot be started as the starting acceleration of the front vehicle is too slow, when the current speed $v_{behind}$ of the behind vehicle is less than 10, taking the acceleration of the front vehicle as the required acceleration of the behind vehicle, meanwhile, decelerating the acceleration of the behind vehicle under a constraint of the commanded speed, when $a_{behind} < a_{cmdv}$, taking $a_{cmdv}$ as the required acceleration of the behind vehicle.

Specifically, the determining the required acceleration of the behind vehicle under a minimum air brake force which can ensure deceleration of the behind vehicle when the front vehicle accelerates and the behind vehicle decelerates includes the following steps:

when $a_{front} > 0$ and *com _acc(i) + ele _ max_ acc + resis + ramp < 0* :

$$ref\_acc = com\_acc(i) + ele\ \max\_acc + resis + ramp$$

in other cases:

$$ref\_acc = (tv * tv - v_{behind} * v_{behind})/2 * (tpos - s_b)$$ ,

$a_{front}$ is the acceleration of the front vehicle, *com_acc(i)* is deceleration corresponding to the minimum air brake force under a condition of decelerating the behind vehicle, *ele max acc* is the deceleration corresponding to the maximum electric brake of the behind vehicle, *resis* is deceleration corresponding to basic resistance, *ramp* is deceleration corresponding to a current ramp, tv is a target speed, $v_{behind}$ is a current speed of the behind vehicle, *tpos* is a target position, *ref_acc* is required acceleration of the behind vehicle under the minimum air brake force which can ensure the deceleration of the behind vehicle, and $s_b$ is a current position of the behind vehicle.

Specifically, the determining a corresponding traction or brake level according to the required acceleration of the behind vehicle includes the following steps:

when determining that the behind vehicle needs to accelerate, controlling an output to be a traction level corresponding to the required acceleration of the behind vehicle; and
when determining that the behind vehicle needs to decelerate, and a dynamic brake of the train meets a speed regulation requirement, controlling the output to be a brake level that does not exceed the required acceleration of the behind vehicle.

In a second aspect, an embodiment of the present disclosure provides a system for cooperative control of automatic train operation, including:

an air brake application and cancellation module, configured to set air brake application or cancellation of a behind vehicle according to a safety distance between a front vehicle and the behind vehicle
a variable time headway determining module, configured to set a corresponding variable time headway model according to speed states and air brake states of the front vehicle and the behind vehicle;
a module for determining required acceleration of the behind vehicle, configured to determine a difference between an actual vehicle distance and an ideal vehicle distance according to driving data of the front vehicle and the behind vehicle as well as the variable time headway model; determine required acceleration of the behind vehicle when the difference tends to 0; restrict the required acceleration of the behind vehicle by using commanded acceleration; determine required acceleration of the behind vehicle under a minimum air brake force which can ensure deceleration of the behind vehicle when the front vehicle accelerates and the behind vehicle decelerates, and record the required acceleration as first acceleration; determine required acceleration of the behind vehicle corresponding to a corresponding minimum air brake under a condition of no collision, and record the required acceleration as second acceleration; record the smaller of the first acceleration and the second acceleration as acceleration of the behind vehicle under the constraint of an air brake force; and when the required acceleration of the behind vehicle is less than the acceleration of the behind vehicle under the constraint of the air brake force, take the acceleration of the behind vehicle under the constraint of the air brake force as the required acceleration of the behind vehicle; and

a behind vehicle traction brake module, configured to determine a corresponding traction or brake level according to the required acceleration of the behind vehicle.

Specifically, the air brake application and cancellation module is specifically configured to:

enable the behind vehicle to start air brake application when an interval between air brake application time of the behind vehicle and previous air brake application time is longer than required charging time of air brake, a speed of the behind vehicle is greater than an irreducible speed, and any of conditions 1, 2 and 3 is met;
condition 1: the front vehicle and the behind vehicle are all in a deceleration state, the front vehicle stops with current deceleration, the behind vehicle stops with a maximum electric brake force, and the behind vehicle stops at a position exceeding the front vehicle;
condition 2: when the front vehicle is in an acceleration state, and the behind vehicle is in a deceleration state, deceleration of the front vehicle is calculated according to the minimum electric brake, the front vehicle and the behind vehicle both stop with the current deceleration, and the behind vehicle stops at a position exceeding the front vehicle; and
condition 3: the sum of a speed of the behind vehicle and a configured speed is greater than a reference speed, where the reference speed is an estimated commanded speed obtained at the end of re-charging of the behind vehicle after venting, and the maximum electric brake cannot offset deceleration caused by ramp and resistance or an increase of an adjustment speed and a charging speed;
the sum of the speed of the behind vehicle and the configured speed is less than the reference speed, where the reference speed is an estimated commanded speed obtained at the end of re-charging of the behind vehicle after venting; and
when the sum of an estimated running distance of the behind vehicle during charging, an estimated running distance of the behind vehicle from venting to stopping and a current position of a following vehicle is less than the sum of a position where the front vehicle is located and an overall estimated running distance of the front vehicle until stopping, the air brake of the behind vehicle is canceled.

Based on the same inventive concept, an embodiment of the present disclosure further provides a computer storage medium. A computer executable instruction is stored in the computer storage medium, and the computer executable instruction, when executed, can implement the method for cooperative control of automatic train operation above.
The technical solution provided by the embodiments of the present disclosure at least includes the following beneficial effects:
Through automatic collaborative control, the application and cancellation of the air brake suitable for the following train is achieved, meanwhile, the air brake of the behind vehicle is analyzed and calculated. According to the air brake application and cancellation conditions, an inter-vehicle time headway between the front vehicle and the behind vehicle is restricted, and a control method suitable for vehicle-vehicle following in locomotive ad hoc network is determined. Meanwhile, a vehicle-vehicle following control method suitable for high-speed EMU is provided, which is suitable for locomotives and high-speed EMU equipped with ATO equipment, makes the behind vehicle keep a certain safety distance with the front vehicle and, smoothly follow the front vehicle. Appropriate air brake magnitude for the behind vehicle can be selected, the flexible configuration of the driving scheme for the behind vehicle can be achieved, the transportation efficiency is improved, and the automatic train operation ability of the train is improved, making the automatic locomotive operation safer.
Other features and advantages of the present disclosure will be set forth in the following description, and will be apparent in part from the specification, or may be learned by implementing the present disclosure. The objectives and other advantages of the present disclosure may be implemented and acquired from the structure pointed out in the specification, claims and drawings.
The technical solution of the present disclosure is further described below in detail with reference to accompanying drawings and embodiments.

## BRIEF DESCRIPTION OF THE DRAWINGS

The accompanying drawings, which constitute a part of the present disclosure, are used to provide a further understanding of the present disclosure, and are used to explain the present disclosure with the embodiments of the present disclosure, which do not constitute a limitation of the present disclosure. In the drawings:

FIG. 1 is an overall design block diagram of cooperative control of automatic train operation according to an embodiment of the present disclosure;

FIG. 2 is a flow diagram of cooperative control of automatic train operation according to an embodiment of the present disclosure;

FIG. 3 is a schematic diagram of the driving of a front vehicle and a behind vehicle according to an embodiment of the present disclosure;

FIG. 4 is a schematic diagram of air brake application and cancellation according to an embodiment of the present disclosure.

## DETAILED DESCRIPTION

In the following, various exemplary embodiments of the present disclosure will be described more detailed with reference to accompanying drawings. Although exemplary embodiments of the present disclosure are shown in the accompanying drawings, it should be understood that the present disclosure can be implemented in various forms and should not be limited by the embodiments set forth herein. Rather, these embodiments are provided for a more thorough understanding of the present disclosure, and will fully convey the scope of the present disclosure to those skilled in the art.

In order to solve the problems in the prior art, an embodiment of the present disclosure provides a method and system for cooperative control of automatic train operation, and a computer storage medium.

Embodiment 1

Embodiment 1 of the present disclosure provides a method for cooperative control of automatic train operation, which is suitable for locomotives and high-speed EMUs equipped with ATO (Automatic Train Operation) equipment.

Step S1. Air brake application and cancellation conditions of a behind vehicle are set according to a safety distance between a front vehicle and the behind vehicle.

In some specific embodiments, an air brake applying condition of a behind vehicle is as follows:

the behind vehicle is enabled to start air brake application when an interval between air brake application time of the behind vehicle and previous air brake application time is longer than required charging time of air brake, a speed of the behind vehicle is greater than an irreducible speed, and any of conditions 1, 2 and 3 is met;

condition 1: the front vehicle and the behind vehicle are all in a deceleration state, the front vehicle stops with current deceleration, the behind vehicle stops with a maximum electric brake force, and the behind vehicle stops at a position exceeding the front vehicle;

condition 2: when the front vehicle is in an acceleration state, and the behind vehicle is in a deceleration state, deceleration of the front vehicle is calculated according to the minimum electric brake, the front vehicle and the behind vehicle both stop with the current deceleration, and the behind vehicle stops at a position exceeding the front vehicle; and

condition 3: the sum of a speed of the behind vehicle and a configured speed is greater than a reference speed, where the reference speed is an estimated commanded speed obtained at the end of re-charging of the behind vehicle after venting, and the maximum electric brake cannot offset deceleration caused by ramp and resistance or an increase of an adjustment speed and a charging speed.

In some specific embodiments, an air brake cancellation condition of the behind vehicle is as follows:

the sum of the speed of the behind vehicle and the configured speed is less than the reference speed, where the reference speed is an estimated commanded speed obtained at the end of re-charging of the behind vehicle after venting; and

when the sum of an estimated running distance of the behind vehicle during charging, an estimated running distance of the behind vehicle from venting to stopping and a current position of a following vehicle is less than the sum of a position where the front vehicle is located and an overall estimated running distance of the front vehicle until stopping, the air brake of the behind vehicle is canceled.

In some specific embodiments, a method for cooperative control of automatic train operation further includes the following steps:

when the front vehicle and the behind vehicle are high-speed train sets, the sum of a displacement of the behind vehicle during delay, a displacement of the behind vehicle when the maximum electric brake is applied again and a current position of the behind vehicle is less than the sum of the position where the front vehicle is located and a displacement of the front vehicle until stopping when the minimum electric brake is applied, the acceleration of the behind vehicle can be improved.

The air brake application and cancellation conditions of the behind vehicle may also be properly modified and restricted according to the performance of the locomotive.

Step S2. A corresponding variable time headway model is set according to speed states and air brake states of the front vehicle and the behind vehicle.

In some specific embodiments, the setting a corresponding variable time headway model according to speed states and air brake states of the front vehicle and the behind vehicle includes the following steps:

An inter-vehicle time headway is restricted by sections according to the air brake application and cancellation conditions, and a basic inter-vehicle time headway between the front vehicle and the behind vehicle is designed as $t_1$ (configurable);

when the front vehicle and the behind vehicle are both in a deceleration state, and the behind vehicle is in an air brake canceling state, it is satisfied that:

$$T_{fb} = ((s_b - s_f) - l_{trainlen} + (fr\_pos\_a - be\_pos\_a)) / v_{behind}$$

, and when $T_{fb}$ does not exceed $t_1$:

the inter-vehicle time headway between the front vehicle and the behind vehicle is as follows:

$$T_{fb} = t_1 - ((s_b - s_f) - l_{trainlen} + (fr\_pos\_a - be\_pos\_a)) / v_{behind}$$

where $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, *fr_pos_a and be_posa* are running distances of the front vehicle and the behind vehicle until stopping when the front vehicle and the behind vehicle are both under a deceleration condition, respectively, and $v_{behind}$ is a current speed of the behind vehicle.

When the behind vehicle is in an air brake canceling state, and the front vehicle is in an acceleration state, it is satisfied that:

$$T_{fb} = ((s_b - s_f) - l_{trainlen} + (fr\_pos\_b - be\_pos\_b)) / v_{behind}$$

, and when $T_{fb}$ does not exceed $t_1$:

the inter-vehicle time headway between the front vehicle and the behind vehicle is:

$$T_{fb} = t_1 - ((s_b - s_f) - l_{trainlen} + (fr\_pos\_b - be\_pos\_b)) / v_{behind},$$

where $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, *fr_pos_a and be_pos_a* are running distances of the front vehicle and the behind vehicle until stopping when the front vehicle and the behind vehicle are both under a deceleration condition, respectively, and $v_{behind}$ is a current speed of the behind vehicle.

When the behind vehicle is in an air brake applying state, it is satisfied that:

$$T_{fb} = ((s_b - s_f) - l_{trainlen} + (fr\_pos\_c - be\_pos\_c)) / v_{behind}$$

, and when $T_{fb}$ does not exceed $t_1$:

the inter-vehicle time headway between the front vehicle and the behind vehicle is:

$$T_{fb} = t_1 - ((s_b - s_f) - l_{trainlen} + (fr\_pos\_c - be\_pos\_c)) / v_{behind},$$

where $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, *be_pos_c* is an overall estimated running distance of the behind vehicle in the charging-venting process, *fr_pos_c* is an overall estimated running distance from the front vehicle to the stopping, and $v_{behind}$ is a current speed of the behind vehicle.

When the above conditions are all unsatisfied, the inter-vehicle time headway needs to be reduced, that is, the inter-vehicle time headway is set as $t_2$ in a unified manner.

when the front vehicle and the behind vehicles are high-speed train sets, the basic inter-vehicle time headway between the front vehicle and the behind vehicle is designed as $t_3$, it is satisfied that:

$$T_{fb} = ((s_b - s_f) - l_{trainlen} + (fr\_pos\_d - be\_pos\_d)) / v_{behind}$$

, and when $T_{fb}$ does not exceed $t_3$:
the inter-vehicle time headway between the front vehicle and the behind vehicle is $T_{fb} = t_3 - ((s_b - s_f) - l_{trainlen} + (fr\_pos\_d - be\_pos\_d))/v_{behind}$, otherwise, reducing the inter-vehicle time headway, that is, setting inter-vehicle time headway as $t_4$ in a unified way.

Step S3. A difference between an actual vehicle distance and an ideal vehicle distance is determined according to the driving data of the front vehicle and the behind vehicle and the variable time headway model. Required acceleration of the behind vehicle when the difference tends to 0 is determined. Required acceleration of the behind vehicle is restricted by using commanded acceleration, the required acceleration of the behind vehicle under the minimum air brake force which can ensure the deceleration of the behind vehicle when the front vehicle accelerates and the behind vehicle decelerates is determined, and is recorded as first acceleration. The required acceleration of the behind vehicle corresponding to the corresponding minimum air brake under a condition of no collision is determined, and recorded as second acceleration. The smaller of the first acceleration and the second acceleration is taken as the acceleration of the behind vehicle under the constraint of an air brake force. The required acceleration of the behind vehicle under a constraint of the air brake force is used as the required acceleration of the behind vehicle when the required acceleration of the behind vehicle is less than the acceleration of the behind vehicle under the constraint of the air brake force.

**In** some specific embodiments, the determining a difference between an actual vehicle distance and an ideal vehicle distance according to the driving data of the front vehicle and the behind vehicle and the variable time headway model includes the following steps:

A vehicle cooperative following model is determined based on the driving data of the front vehicle, the driving data of the behind vehicle and the variable time headway model, where a difference between the actual vehicle distance and the ideal vehicle of the front vehicle and the behind vehicle is as follows:

$$\Delta s(t) = s_{real} - d_{safe} = s_f(t) - s_b(t) - T_{fb} v_{behind}(t) - d$$

where $s_{real}$ is an actual distance between the front vehicle and the behind vehicle, $d_{safe}$ is a safety distance between the front vehicle and the behind vehicle, $s_f(t)$ is a current position of the front vehicle at time $t$, $s_b(t)$ is a current position of the behind vehicle at time $t$, $T_{fb}$ is an inter-vehicle time headway between the front vehicle and the behind vehicle, $v_{behind}(t)$ is a current speed of the behind vehicle, $d$ is a distance between the front vehicle and the behind vehicle at rest.

In some specific embodiment, the determining the required acceleration of the behind vehicle when the difference tends to 0 includes the following steps:

A sliding mode switching function is selected:

$$Y = \Delta s(t) + \dot{s}_{real}(t) = s_{real}(t) - T_{fb} v_b(t) - d + \dot{s}_{real}(t)$$

where $\Delta s(t)$ is a difference between an actual vehicle distance and an ideal vehicle distance between the front vehicle and the behind vehicle at time $t$, $\dot{s}_{real(t)}$ is a relative speed of the front vehicle and the behind vehicle at time $t$, $s_{real(t)}$ is an actual distance between the behind vehicle and the front vehicle, $T_{fb}$ is the inter-vehicle time headway between the front vehicle and the behind vehicle, $v_b(t)$ is a current speed of the behind vehicle, and $d$ *is* a distance between the front vehicle and the behind vehicle at rest.

A sliding mode control equation is established through a constant-speed approaching rate:

$$\dot{Y} + \lambda Y = 0$$

when the sliding mode switching function Y tends to 0, it is satisfied that the sliding mode control equation is 0, that is, $\Delta s(t) + \dot{s}_{real}(t) \to 0$,
$\dot{Y}$ represents a derivative of Y, $\lambda$ represents an approaching speed; and if $\lambda$ is too small, it is indicated that the speed approaches to slow; if $\lambda$ is too large, it is indicated that the approaching speed is fast, and $\lambda$ in this algorithm is 0.2.

The sliding mode switching function is substituted into the sliding mode control equation to obtain required acceleration $a_{behind}(t)$ of the behind vehicle as follows:

$$a_{behind}(t) = \frac{1}{T_{fb}+1}\left\{(\lambda+1)\dot{s}_{real(t)} + \lambda(s_{real(t)} - d_{safe(t)}) + a_{front}(t)\right\}$$

in the formula, $a_{behind}(t)$ is the acceleration of the behind vehicle calculated according to a vehicle cooperative control algorithm, $T_{fb}$ is the inter-vehicle time headway between the front vehicle and the behind vehicle, $\lambda$ represents an approaching speed that the sliding mode switching function Y tends to 0, $\dot{s}_{real}(t)$ is a relative speed of the front vehicle and the behind vehicle at time $t$, $s_{real}(t)$ is an actual distance between the behind vehicle and the front vehicle at time $t$, $d_{safe}(t)$ is a safety distance between the behind vehicle and the front vehicle, and $a_{front}(t)$ is acceleration of the front vehicle at time $t$.

**In** some specific embodiments, the restricting required acceleration of the behind vehicle by using commanded acceleration includes the following steps:
The required acceleration of the behind vehicle is restricted by using the commanded acceleration, and when the speed of the behind vehicle after delay exceeds the commanded speed, $a_{cmdv}$ is taken as the required acceleration of the behind vehicle,

$$a_{cmdv} = \frac{(v_{cmdv} - v_{front})}{t_{delay}}$$

where $v_{cmdv}$ is a commanded speed of the behind vehicle, $v_{front}$ is a speed of the front vehicle, $t_{delay}$ is a delay of the behind vehicle; and the following restrictions are added to prevent the acceleration calculation of the behind vehicle from being too large or too small:
in order to prevent a situation that the behind vehicle cannot be started as the starting acceleration of the front vehicle is too slow, when the current speed $v_{behind}$ of the behind vehicle is less than 10, the acceleration of the front vehicle is taken as the required acceleration of the behind vehicle, and meanwhile, the acceleration of the behind vehicle is decelerated under the constraint of the commanded speed, and when $a_{behind} < a_{cmdv}$, $a_{cmdv}$ is taken as the required acceleration of the behind vehicle.

In some specific embodiments, the determining required acceleration of the behind vehicle under a minimum air brake force which can ensure the deceleration of the behind vehicle when the front vehicle accelerates and the behind vehicle decelerates includes the following steps:

when $a_{front} > 0$ and $com\_acc(i) + ele\_max\_acc + resis + ramp < 0$ :

$$ref\_acc = com\_acc(i) + ele\_max\_acc + resis + ramp$$

in other cases:

$$ref\_acc = (tv*tv - v_{behind}*v_{behind})/2*(tpos - s_b)_,$$

$a_{front}$ is the acceleration of the front vehicle, $com\_acc(i)$ is deceleration corresponding to the minimum air brake force under a condition of decelerating the behind vehicle, *ele max acc* is deceleration corresponding to the maximum electric brake of the behind vehicle, *resis* is deceleration corresponding to basic resistance, *ramp* is deceleration corresponding to a current ramp, tv is target speed, $v_{behind}$ is the current speed of the behind vehicle, *tpos* is a target position, *ref_acc* is the required acceleration of the behind vehicle under the minimum air brake force which is able to ensure the deceleration of the behind vehicle, and $s_b$ is the current position of the behind vehicle.

The above design of the acceleration of the behind vehicle with the ATO may also be designed through other algorithms.

Step S4. A corresponding traction or brake level is determined according to the required acceleration of the behind vehicle.

In some specific embodiments, the determining a corresponding traction or brake level according to the required acceleration of the behind vehicle includes the following steps: when it is determined that the behind vehicle needs to accelerate, an output is controlled to be the traction level corresponding to the required acceleration of the behind vehicle; and when it is determined that the behind vehicle needs to decelerate, and the power brake of the train meets a speed regulation requirement, the output is controlled to be the brake level that does not exceed the required acceleration of the behind vehicle.

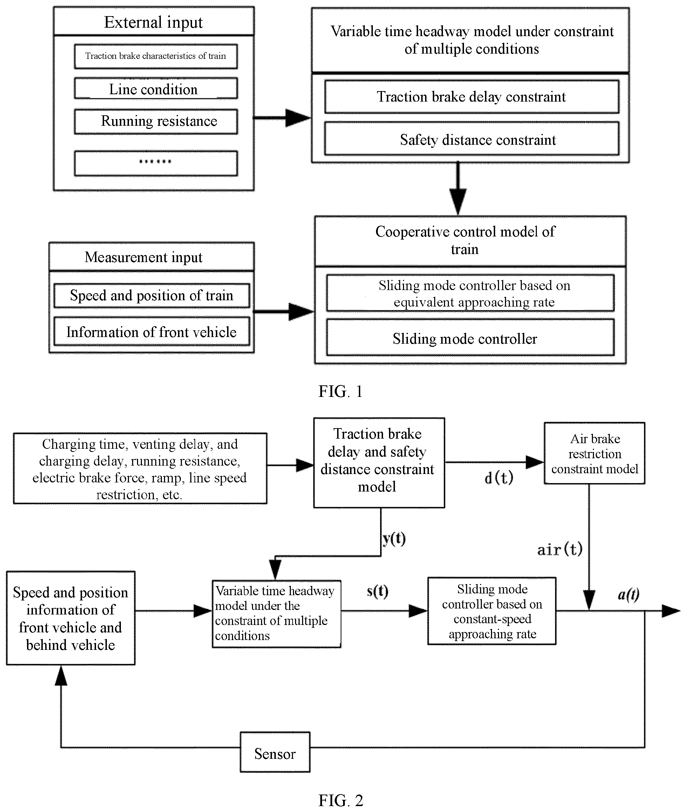

For example, in some specific embodiments, in view of the fact that locomotive generally increases the volume and efficiency by lengthening and weighting, it is easy to cause safety problems such as hook breakage and inability to stop at stations. In order to further improve the transportation efficiency of the locomotive, it is necessary to improve the control level of the locomotive and reduce a tracking distance between trains, and a locomotive automatic driving cooperative control is designed. In order to make the following vehicle always keep a safety distance with the front vehicle, it is necessary to apply reasonable air brake force to a main vehicle in combination with the current line ramp and the position of the front vehicle, and perform collaborative control according to a safety distance model. Such a method can improve the flexibility of the safety distance between the locomotives. As shown in FIG. 1, firstly, according to the relevant information of the front vehicle and the behind vehicle, mainly including the position, speed and acceleration of the front vehicle and the behind vehicle, the air brake is applied at a proper position to ensure that the locomotive runs at ideal deceleration, and a variable time headway model can be obtained based on the air brake constraint. Finally, the expected deceleration of the following vehicle is calculated through a collaborative control algorithm, and the traction brake amount of the locomotive is controlled based on the expected deceleration, finally ensuring the stable operation of the following vehicle.

The control flow is as shown in FIG. 2, after obtaining the position, speed and acceleration information of the front vehicle and the behind vehicle, the relevant information, such as the charging time (after the air brake force is canceled, the locomotive needs to satisfy a certain period of charging time to replenish gas, and the next venting can be carried out after the charging is completed), the venting delay (when the air brake force is only applied to the front of the locomotive, the whole vehicle can reach an ideal brake state after a period of time), running resistance and speed position, is used as an input. Based on a safety distance and delay constraint model *y(t)* and the air brake applying/canceling state *d(t)*, the required air brake application range *air(t)* is obtained through an air brake restriction constraint model according to an obtained electric-pneumatic conversion state of the behind vehicle (this constraint is not needed for the high-speed EMU). A safety distance model *s(t)* of the behind vehicle is obtained by combining the speed, position and acceleration information of the current front vehicle and behind vehicle. Afterwards, the ideal acceleration of the behind vehicle is calculated through a cooperative control model to obtain information $_{a(t)}$ of the acceleration that needs to be applied to the behind vehicle, thus obtaining electric brake and electric traction level output. Finally, a speed sensor is used for performing closed-loop control on the acceleration, speed states in the next cycle, specifically including the following contents.

1. Variable time headway model based on safety distance and delay constraint

(1) Representation method of basic variable time headway model

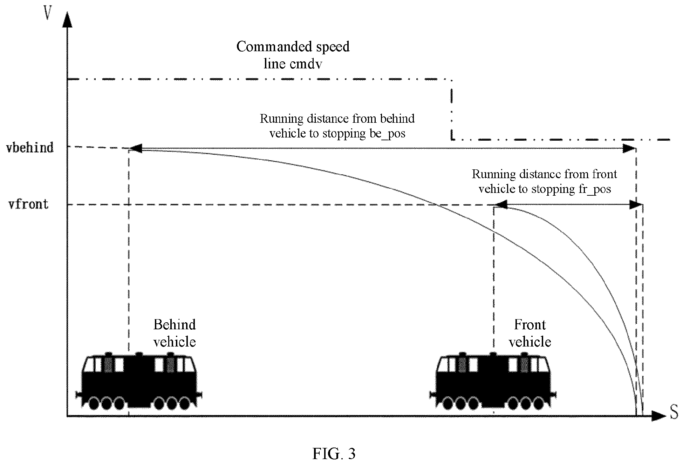

A time headway change model mainly includes a fixed time headway model, and a variable time headway model. The fixed time headway model cannot be changed in real time according to an actual operation state of the locomotive due to poor flexibility, while the variable time headway model is relatively flexible, which can change the distance between the front vehicle and the behind vehicle according to the change of speed, position and acceleration of the front vehicle and the behind vehicle. As the front vehicle is not controlled by the present vehicle, and the application/cancellation of the air brake will quickly change the speed of the locomotive, the influence of the air brake on the inter-vehicle time headway between the front vehicle and the behind vehicle needs to be fully considered. At first, the basic variable time headway model can be established, as shown in FIG. 3, the basic locomotive time headway is set as $t_1$ (configurable) at present. When the front vehicle and the behind vehicle are close to each other after stopping, the inter-vehicle time headway is increased; and when the two vehicles are far away from each other after stopping, the inter-vehicle time headway is reduced. The basic formula of the inter-vehicle time headway is set as follows:

$$T_{fb} = t_1 - ((s_f - s_b) - l_{trainlen} + (fr\_pos - be\_pos))/v_{behind}$$

where $l_{trainlen}$ is a length of the front vehicle, $s_f$ is a current position of the front vehicle, $s_b$ is a current position of the behind vehicle, $fr\_pos$ is a displacement of the front vehicle until stopping, $be\_pos$ is a displacement of the behind vehicle until stopping, and $v_{behind}$ is a current speed of the behind vehicle.

(1) Variable time headway model under multiple constraint conditions of behind vehicle

1) Representation of safety distance constraint between behind vehicle and front vehicle

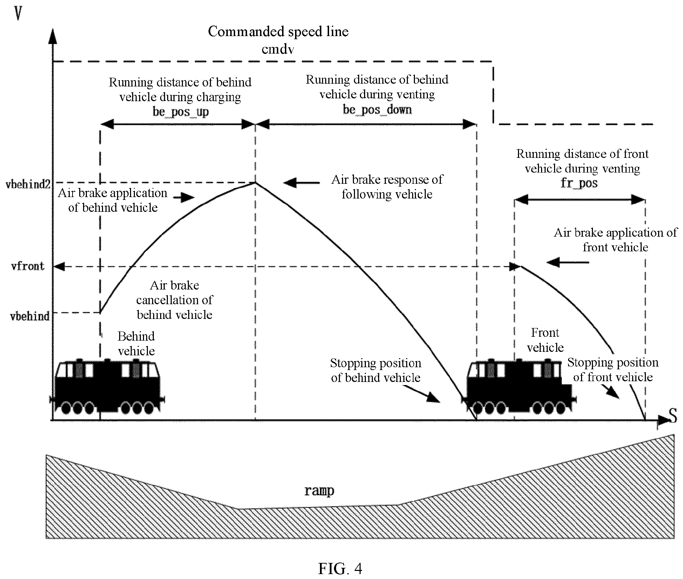

The air brake application or cancellation is as shown in FIG. 4, including two conditions, such as applying and canceling. As the combined action of the electric brake and air brake is required during the operation of the locomotive, it takes a certain charging time to charge the locomotive after the air brake is canceled, so as to ensure that the locomotive can apply air brake stably again. Therefore, an air brake application condition needs to be fully considered in the design of the control algorithm. The air brake of the behind vehicle mainly includes the following five conditions, where condition 1 and condition 2 are necessary conditions for the application of the air brake, and the application of the air brake can be started as soon as one of condition 3, condition 4 and condition 5 is met.

Condition 1. An interval between the air brake application time of the behind vehicle and previous air brake application time is greater than required charging time of air brake.

Condition 2. A speed of the behind vehicle is greater than a irreducible speed.

Condition 3. When the front vehicle and the behind vehicle are all in a deceleration state, if the front vehicle stops at a current deceleration, the behind vehicle stops with an maximum electric brake force, and the behind vehicle stops at a position exceeding the front vehicle, the air brake is applied, where a method for calculating a distance of the front vehicle and the behind vehicle until stopping is as follows:

$$be\_pos\_a = 0 - v_{behind} * v_{behind} / ((ele\_\max\_acc + resis - ramp) * 2)$$

$$fr\_pos\_a = 0 - v_{front} * v_{front} / (a_{front} * 2)$$

where $fr\_pos\_a$ and $be\_posa$ are running distances of the front vehicle and the behind vehicle until stopping when the front vehicle and the behind vehicle are both under a deceleration condition, respectively, $v_{front}$ and $v_{behind}$ are speeds of the front vehicle and the behind vehicle, respectively, $a_{front}$ is acceleration of the front vehicle and the behind vehicle in the current cycle, respectively, $ele\_max\_acc$ is deceleration corresponding to the maximum electric brake, $resis$ is deceleration corresponding to basic resistance, and $ramp$ is deceleration corresponding to a current ramp.

Condition 4. When the front vehicle is in an acceleration state, and the behind vehicle is in a deceleration state, the deceleration of the front vehicle is calculated according to the minimum electric brake, the front vehicle and the behind vehicle stop at the current deceleration, and the behind vehicle stops at a position exceeding the front vehicle, the air brake is applied, and a method for calculating a distance from each of the front vehicle and the behind vehicle to stopping is as follows:

$$be\_pos\_b = 0 - v_{behind} * v_{behind} / (ele\_\max\_acc + resis - ramp) * 2$$

$$fr\_pos\_b = 0 - v_{front} * v_{front} / (B_{min}\_acc * 2)$$

where $fr\_pos\_a$ and $be\_posa$ are running distances of the front vehicle and the behind vehicle until stopping when the front vehicle and the behind vehicle are both under a deceleration condition, respectively, $B_{min}\_acc$ is deceleration corresponding to the minimum electric brake applied to the front vehicle, $v_{front}$ and $v_{behind}$ are speeds of the front vehicle and the behind vehicle.

Condition 5. The sum of a speed $v_{behind}$ of the behind vehicle and a configured speed $v_1$ is greater than or equal to a first reference speed temp_$v_1$ (the first reference speed temp_$v_1$ is the command speed corresponding to a position of the behind vehicle after charging), and the maximum electric brake cannot offset the deceleration caused by the ramp and resistance, or an increase of an adjustment speed and a charging speed. That is, the following two conditions are met at the

same time:

$$temp\_v_1 <= v_{behind} + v1$$

$$ele\_\max\_acc >= ramp + resis$$

where temp_v1 is a commanded speed corresponding to a position of the behind vehicle after charging, $v1$ is an estimated locomotive speed increase during venting delay, *ele max acc* is deceleration corresponding to the maximum electrical brake, and $v_{behind}$ is a current speed of the behind vehicle.

2) Representation of traction brake and delay constraint of following vehicle

Air brake cancellation condition 1: the sum of the speed $v_{behind}$ of the behind vehicle and the configured speed $v_2$ is less than or equal to a second reference speed temp_$v_2$ (the second reference speed temp_$v_2$ is an estimated commanded speed obtained at the end of the re-charging of the locomotive after venting).

$$temp\_v_2 >= v_{behind} + v2$$

v2 is a locomotive speed increase estimated by the air brake according to a delay period of charging and venting.
Air brake cancellation condition 2: when the air brake of the following vehicle is canceled, and a situation that the sum of an estimated running distance of the behind vehicle in the charging process, an estimated running distance of the behind vehicle from venting until stopping and a current position of the behind vehicle is less than the sum of a position where the front vehicle is located and an overall estimated running distance of the front vehicle until stopping (if the deceleration of the front vehicle at this time is less than the deceleration corresponding to the minimum air brake, the displacement of the front vehicle is calculated according to the current deceleration, and when the front vehicle is in the acceleration state, the deceleration of the front vehicle is calculated with the minimum electric brake), the air brake can be canceled.

$$v_{behind\ 2} = v_{behind} + (ele\_\max\_acc - ramp + resis) * (be\_fill\_time + air\_exau\_time)$$

$$be\_pos\_up = (v_{behind} + v_{behind2}) * (be\_fill\_time + air\_exau\_time) / 2$$

$$be\_pos\_down = v_{behind\ 2} * v_{behind2} / (2 * (be\_acc))$$

$$be\_pos\_c = be\_pos\_down + be\_pos\_up$$

$$fr\_pos\_c = v_{front} * v_{front} / (2 * (fr\_acc))$$

*ele_max_acc* is deceleration corresponding to a maximum electrical brake, *be_posup* is an estimated running distance of the behind vehicle in the charging process, *be_posdown* is an estimated running distance of the behind vehicle from venting until stopping, $v_{behind2}$ is a speed reached by the behind vehicle after charging, $v_{behind}$ is a current speed of the behind vehicle, *be acc* is deceleration corresponding to the current electric brake applied by the behind vehicle, *be_fill_time* is charging time, *air_exau_time* is a venting delay of the behind vehicle, *fr_acc* is estimated deceleration of the front vehicle (which is estimated according to the acceleration and deceleration conditions of the front vehicle), *be_posc* is an overall estimated running distance of the behind vehicle in the charing and venting process, and *fr_pos_c* is an overall estimated running distance of the front vehicle until stopping.
Electric traction brake constraint conditions for high-speed train sets are as follows: due to high speed per hour of the high-speed train sets, the influence of electric traction brake delay on the distance between the front vehicle and the behind vehicle needs to be considered, which is similar to the air brake cancellation condition 2, a situation that the sum of a displacement of the following vehicle during delay, the displacement of the following vehicle when the maximum electric brake is applied again and a current position of the following vehicle is less than the sum of the position where the front vehicle is located and a displacement of the front vehicle until stopping when the minimum electric brake is applied (if the current deceleration of the electric brake of the front vehicle is less than the deceleration corresponding to the minimum electric brake at this time, the displacement of the front vehicle is calculated with the current deceleration, and when the current vehicle is in an acceleration state, the deceleration of the front vehicle is calculated with the minimum electric brake), and the acceleration of the behind vehicle can be improved.

$$v_{behind\,2} = v_{behind} + (ele\_\max\_acc - ramp + resis)*(time\_delay)$$

$$be\_pos\_up = (v_{behind} + v_{behind\,2})*(time\_delay)/2$$

$$be\_pos\_down = v_{behind\,2}*v_{behind2}/(2*(be\_acc))$$

$$be\_pos\_d = be\_pos\_down + be\_pos\_up$$

$$fr\_pos\_d = v_{front}*v_{front}/(2*(fr\_acc))$$

*ele max acc* is deceleration corresponding to the maximum electrical brake, *be_posup* is an estimated running distance of the behind vehicle during delay, *be_posdown* is an estimated running distance of the behind vehicle until stopping, $v_{behind}$ is a current speed of the behind vehicle, $v_{behind2}$ is a speed reached by the behind vehicle after delay, *be_acc* is deceleration corresponding to the current electric brake applied by the behind vehicle, *time_delay* is an electrical traction brake delay, *fr_acc* is estimated deceleration of the front vehicle (which is estimated according to the acceleration and deceleration conditions of the front vehicle), *be_pos_d* is an overall estimated running distance of the behind vehicle in the charing and venting process, and *fr_pos_d* is an overall estimated running distance of the front vehicle until stopping.

3) Variable time headway model under multiple constraint conditions of behind vehicle

For the cooperative control of locomotive automatic driving, as the inter-vehicle time headway between the front vehicle and the behind vehicle needs to change according to the air brake application and cancellation conditions, the inter-vehicle time headway is restricted in sections according to the air brake application and cancellation conditions. The basic inter-vehicle time headway between the front vehicle and the behind vehicle is designed to be $t_1$ (configurable). When the front vehicle and the behind vehicle are both in a deceleration state, and the behind vehicle is in an air brake cancelling state, it is satisfied that:
when

$$T_{fb} = ((s_b - s_f) - l_{trainlen} + (fr\_pos\_a - be\_pos\_a))/v_{behind} <= t_1$$

the inter-vehicle time headway between the front vehicle and the behind vehicle is as follows.

$$T_{fb} = t_1 - ((s_b - s_f) - l_{trainlen} + (fr\_pos\_a - be\_pos\_a))/v_{behind}$$

When the behind vehicle is in an air brake canceling state, and the front vehicle is in an acceleration state, it is satisfied that:

when

$$T_{fb} = ((s_b - s_f) - l_{trainlen} + (fr\_pos\_b - be\_pos\_b))/v_{behind} <= t_1$$

the inter-vehicle time headway between the front vehicle and the behind vehicle is as follows.

$$T_{fb} = t_1 - ((s_b - s_f) - l_{trainlen} + (fr\_pos\_b - be\_pos\_b))/v_{behind}$$

When the behind vehicle is in an air brake applying state, it is satisfied that:

when

$$T_{fb} = ((s_b - s_f) - l_{trainlen} + (fr\_pos\_c - be\_pos\_c))/v_{behind} <= t_1.$$

the inter-vehicle time headway between the front vehicle and the behind vehicle is as follows:

$$T_{fb} = t_1 - ((s_b - s_f) - l_{trainlen} + (fr\_pos\_c - be\_pos\_c))/v_{behind}$$

when the above conditions are all unsatisfied, it is indicated that the distance between the front vehicle and the behind vehicle is far, the inter-vehicle time headway needs to be reduced, that is, the inter-vehicle time headway is set as $t_2$ (configurable) in a unified manner.

For the cooperative control of automatic driving of the high-speed train set, the basic inter-vehicle time headway between the front vehicle and the behind vehicle is designed as $t_3$ (configurable), it is satisfied that:

when

$$T_{fb} = ((s_b - s_f) - l_{trainlen} + (fr\_pos\_d - be\_pos\_d))/v_{behind} <= t_3.$$

the inter-vehicle time headway between the front vehicle and the behind vehicle is as follows:

$$T_{fb} = t_3 - ((s_b - s_f) - l_{trainlen} + (fr\_pos\_d - be\_pos\_d))/v_{behind}$$

otherwise, it is indicated that a distance between the front vehicle and the behind vehicle is far, the inter-vehicle time headway needs to be reduced, that is, the inter-vehicle time headway is set as $t_4$ (configurable) in a unified manner.

2. Cooperative control model of train

Based on the driving data of the front vehicle, the driving data of the present vehicle and the variable time headway safety distance model, a vehicle cooperative following model is established, and a difference between the actual vehicle distance and the ideal vehicle distance is as follows:

$$\Delta s(t) = s_{real} - d_{safe} = s_f(t) - s_b(t) - T_{fb} v_{behind}(t) - d$$

where $s_{real}$ is an actual distance between the front vehicle and the behind vehicle, $d_{safe}$ is a safety distance between the front vehicle and the behind vehicle, $s_f(t)$ is a current position of the front vehicle at time $t$, $s_b(t)$ is a current position of the behind vehicle at time $t$, $T_{fb}$ is the inter-vehicle time headway between the front vehicle and the behind vehicle, $v_{behind}(t)$ is a current speed of the behind vehicle, and $d$ is a distance between the front vehicle and the behind vehicle at rest, which is generally 450 m (configurable). In order to make the present vehicle always have an ideal position deviation from the front vehicle, the algorithm is designed to approximate the sum of the inter-vehicle distance deviation and the relative speed of the front vehicle and behind vehicle to zero on the premise that the speed of the vehicle does not change greatly. Finally, a sliding mode switching function is selected:

$$Y = \Delta s(t) + \dot{s}_{real}(t) = s_{real}(t) - T_{fb} v_b(t) - d + \dot{s}_{real}(t)$$

A sliding mode control equation is established through a constant-speed approaching rate:

$$\dot{Y} + \lambda Y = 0$$

when the sliding mode switching function Y->0, it can be satisfied that the sliding mode control equation is 0, i.e., $\Delta s(t)+\dot{s}_{real}(t)\to 0$,

$\lambda$ represents an approaching speed; If $\lambda$ is too small, it is indicated that the speed tends to be slow, if the $\lambda$ is too large, it is indicated that the approaching speed is fast, and $\lambda$ in this algorithm is 0.2.

The sliding mode switching function is substituted into the sliding mode control equation to finally obtain expected acceleration $a_{behind}(t)$ of the behind vehicle as follows:

$$a_{behind}(t) = \frac{1}{T_{fb}+1}\left\{(\lambda+1)\dot{s}_{real(t)} + \lambda(s_{real(t)} - d_{safe(t)}) + a_{front}(t)\right\}$$

in the formula, $a_{behind}(t)$ is acceleration of the behind vehicle calculated according to the vehicle cooperative control algorithm, $\dot{s}_{real(t)}$ is a relative speed of the front vehicle and the behind vehicle, $s_{real(t)}$ is an actual distance between the behind vehicle and the front vehicle, and $d_{safe(t)}$ is a safety distance between the behind vehicle and the front vehicle.

To prevent the speed of the behind vehicle from exceeding the commanded speed, the acceleration of the behind vehicle is restricted by the commanded acceleration. When the speed of the behind vehicle after delay exceeds the commanded speed, the acceleration of the behind vehicle is as follows:

$$a_{cmdv} = \frac{(v_{cmdv} - v_{front})}{t_{delay}}$$

where $v_{cmdv}$ is a commanded speed of the behind vehicle, $v_{front}$ is a speed of the front vehicle, and $t_{delay}$ is a delay of the behind vehicle. The following restrictions are added to prevent the acceleration calculation of the behind vehicle from being too large or too small:

to prevent a situation that the behind vehicle cannot be started as the starting acceleration of the front vehicle is too slow, when $v_{behind}$ is less than 10, the $v_{behind}$ is the speed of the behind vehicle.

$$a_{behind} = a_{front}$$

Meanwhile, the acceleration of the rear vehicle is decelerated under a constraint of the commanded speed, when $a_{behind} < a_{cmdv} : a_{behind} = a_{cmdv}$

3. Restriction constraint of air brake force range

On the premise of determining that the behind vehicle can apply the air brake, in the stage of applying the air brake by the behind vehicle, the smaller in the decelerations obtained by the following conditions is taken.

(Condition 1: Deceleration of the behind vehicle configured according to a target point of the behind vehicle and deceleration of the front vehicle and the behind vehicle) When the front vehicle is in an acceleration state and the behind vehicle is in a deceleration state, the use of the deceleration of the behind vehicle can ensure that the minimum air brake can decelerate under a deceleration condition of the behind vehicle (the reason for setting this condition is to prevent the behind vehicle from stopping due to long charging time caused by excessive air brake force). When the front vehicle is in a deceleration state, it is determined that the deceleration of the behind vehicle from the current position to the target point employs the configured deceleration, with related formula as follows:

when $a_{front} = 0$ and $com\_acc(i) + ele\_max\_acc + resis + ramp < 0$ :

$$ref\_acc = com\_acc(i) + ele\_max\_acc + resis + ramp$$

in other cases:

$$ref\_acc = (tv * tv - v_{behind} * v_{behind}) / 2 * (tpos - s_b)$$,

com_acc(i) is a magnitude of the minimum air brake force under a condition of decelerating the behind vehicle, *ele max acc* is deceleration corresponding to the maximum electrical brake of the behind vehicle, tv is a target speed, *tpos* is a target position, *ref_acc* is a magnitude of the finally applied deceleration of the behind vehicle, and $s_b$ is a current position of the behind vehicle.

(Condition 2: Deceleration corresponding to a corresponding minimum air brake under a condition of no collision) According to the positions and deceleration of the front vehicle and the behind vehicle, the deceleration is obtained by ensuring that the behind vehicle always keeps a safety distance from the front vehicle during charging, that is, a stopping position of the front vehicle is greater than a stopping position of the behind vehicle after second charging and venting, that is, it needs to meet the following requirements:

$$l_{trainlen} + (s_b - s_f) + ((v_{front} * v_{front}) / (2 * a_{front}) - be\_pos\_c) > 0$$

If the deceleration of the front vehicle is less than the deceleration corresponding to the minimum air brake, the displacement of the front vehicle until stopping with the current deceleration is calculated. If the front vehicle is in a deceleration state but the deceleration is great than the deceleration corresponding to the minimum air brake, the displacement of the front vehicle until stopping with the deceleration corresponding to the minimum air brake is calculated. When the front vehicle is in an acceleration state, and the behind vehicle is in a deceleration state, the deceleration of the front vehicle is calculated according to the minimum electrical brake.

The deceleration of the behind vehicle is calculated according to the above conditions, the required deceleration of the behind vehicle is calculated by subtracting the maximum electric brake, the ramp and the resistance from the calculated required deceleration of the behind vehicle. Meanwhile, the minimum air brake force that can satisfy this condition can be calculated as the air brake force needing to be applied by the behind vehicle in the current cycle.

That is, the *ele_max_acc+ resis+com_acc (i)-ramp < ref _acc* condition needs to be satisfied

where *com_acc*(i) is the deceleration corresponding to the air brake force applied under satisfied conditions, the acceleration of the behind vehicle is restricted by the air brake during air brake application, that is:

when

$$a_{behind} < ref\_acc \quad \text{and} \quad a_{behind} = ref\_acc$$:

According to the obtained acceleration and deceleration, the behind vehicle (following vehicle) is converted into a traction brake output, which is calculated as follows:

(1) if it is determined that the behind vehicle needs to accelerate:
the output is controlled to be a traction level corresponding to the expected acceleration (considering the ramp of the line); and
(2) if it is determined that a slave vehicle needs to decelerate,
if the power brake of the train satisfies the speed regulating requirement, the output is controlled to be a brake level close to and less than or equal to an expected deceleration (considering the ramp of the line).

**In** the method of this embodiment, through automatic collaborative control, the application and cancellation of the air brake suitable for the following train is achieved, meanwhile, the air brake of the behind vehicle is analyzed and calculated. According to the air brake application and cancellation conditions, an inter-vehicle time headway between the front vehicle and the behind vehicle is restricted, and a control method suitable for vehicle-vehicle following in locomotive ad hoc network is determined. Meanwhile, a vehicle-vehicle following control method suitable for high-speed EMU is provided, which is suitable for locomotives and high-speed EMU equipped with ATO equipment, makes the behind vehicle keep a certain safety distance with the front vehicle and, smoothly follow the front vehicle. Appropriate air brake magnitude for the behind vehicle can be selected, the flexible configuration of the driving scheme for the behind vehicle can be achieved, the transportation efficiency is improved, and the automatic driving ability of the train is improved, making the automatic locomotive operation safer.

Those skilled in the art can change the above order without departing from the scope of protection of the present disclosure.

Embodiment 2

Embodiment 2 of the present disclosure provides a system for cooperative control of automatic train operation, including:

an air brake application and cancellation module, configured to set air brake application or cancellation of a behind vehicle according to a safety distance between a front vehicle and the behind vehicle;

a variable time headway determining module, configured to set a corresponding variable time headway model according to speed states and air brake states of the front vehicle and the behind vehicle;

a module for determining required acceleration of the behind vehicle, configured to determine a difference between an actual vehicle distance and an ideal vehicle distance according to driving data of the front vehicle and the behind vehicle as well as the variable time headway model; determine required acceleration of the behind vehicle when the difference tends to 0; restrict the required acceleration of the behind vehicle by using commanded acceleration; determine required acceleration of the behind vehicle under a minimum air brake force which is able to ensure the deceleration of the behind vehicle when the front vehicle accelerates and the behind vehicle decelerates, and record the required acceleration as first acceleration; determine required acceleration of the behind vehicle corresponding to a corresponding minimum air brake under the condition of no collision, and record the required acceleration as second acceleration; record the smaller of the first acceleration and the second acceleration as acceleration of the behind vehicle under a constraint of an air brake force; and when the required acceleration of the behind vehicle is less than the acceleration of the behind vehicle under the constraint of the air brake force, take the acceleration of the behind vehicle under the constraint of the air brake force as the required acceleration of the behind vehicle; and

a behind vehicle traction brake module, configured to determine a corresponding traction or brake level according to the required acceleration of the behind vehicle.

In some embodiments, the air brake applying and canceling module is specifically configured to:

enable the behind vehicle to start air brake application when an interval between air brake application time of the behind vehicle and previous air brake application time is longer than required charging time of air brake, a speed of the behind vehicle is greater than an irreducible speed, and any of conditions 1, 2 and 3 is met;

condition 1: the front vehicle and the behind vehicle are all in a deceleration state, the front vehicle stops with current deceleration, the behind vehicle stops with a maximum electric brake force, and the behind vehicle stops at a position exceeding the front vehicle;

condition 2: when the front vehicle is in an acceleration state, and the behind vehicle is in a deceleration state, deceleration of the front vehicle is calculated according to the minimum electric brake, the front vehicle and the behind vehicle both stop with the current deceleration, and the behind vehicle stops at a position exceeding the front vehicle; and

condition 3: the sum of a speed of the behind vehicle and a configured speed is greater than a reference speed, where the reference speed is an estimated commanded speed obtained at the end of re-charging of the behind vehicle after venting, and the maximum electric brake cannot offset deceleration caused by ramp and resistance or an increase of an adjustment speed and a charging speed;

the sum of the speed of the behind vehicle and the configured speed is less than the reference speed, where the reference speed is an estimated commanded speed obtained at the end of re-charging of the behind vehicle after venting; and

when the sum of an estimated running distance of the behind vehicle during charging, an estimated running distance of the behind vehicle from venting to stopping and a current position of a following vehicle is less than the sum of a position where the front vehicle is located and an overall estimated running distance of the front vehicle until stopping, the air brake of the behind vehicle is canceled.

With regard to the system in the above embodiment, the specific way in which each module performs operations has been described in detail in the embodiment of the method, and will not be described in detail here.

In this embodiment, through automatic collaborative control, the application and cancellation of the air brake suitable for the following train is achieved, meanwhile, the air brake of the behind vehicle is analyzed and calculated. According to the air brake application and cancellation conditions, an inter-vehicle time headway between the front vehicle and the behind vehicle is restricted, and a control method suitable for vehicle-vehicle following in locomotive ad hoc network is determined. Meanwhile, a vehicle-vehicle following control method suitable for high-speed EMU is provided, which is suitable for locomotives and high-speed EMU equipped with ATO equipment, makes the behind vehicle keep a certain safety distance with the front vehicle and, smoothly follow the front vehicle. Appropriate air brake magnitude for the behind vehicle can be selected, the flexible configuration of the driving scheme for the behind vehicle can be achieved, the transportation efficiency is improved, and the automatic operation ability of the train is improved, making the automatic locomotive operation safer.

Based on the same inventive concept, an embodiment of the present disclosure further provides a computer storage medium. A computer executable instruction is stored in the computer storage medium, and the computer executable instruction, when executed, can implement the method for cooperative control of automatic train operation above.

Any modification, supplement, equivalent substitution, etc. made within the principle scope of the present disclosure should be included in the scope of protection of the patent of the present disclosure.

**Claims**

1. A method for cooperative control of automatic train operation, comprising the following steps:

setting air brake application and cancellation conditions of a behind vehicle according to a safety distance between a front vehicle and the behind vehicle;
setting a corresponding variable time headway model according to speed states and air brake states of the front vehicle and the behind vehicle;
determining a difference between an actual vehicle distance and an ideal vehicle distance according to driving data of the front vehicle and the behind vehicle as well as the variable time headway model;
determining required acceleration of the behind vehicle when the difference tends to 0;
restricting the required acceleration of the behind vehicle by using commanded acceleration;
determining required acceleration of the behind vehicle under a minimum air brake force which is able to ensure deceleration of the behind vehicle when the front vehicle accelerates and the behind vehicle decelerates, and recording the required acceleration as first acceleration;
determining required acceleration of the behind vehicle corresponding to a corresponding minimum air brake under a condition of no collision, and recording the required acceleration as second acceleration;
recording the smaller of the first acceleration and the second acceleration as acceleration of the behind vehicle under a constraint of an air brake force;
when the required acceleration of the behind vehicle is less than the acceleration of the behind vehicle under the constraint of the air brake force, taking the acceleration of the behind vehicle under the constraint of the air brake force as the required acceleration of the behind vehicle; and
determining a corresponding traction or brake level according to the required acceleration of the behind vehicle.

2. The method according to claim 1, **characterized in that** an air brake application condition of the behind vehicle is as follows:

the behind vehicle is enabled to start air brake application when an interval between air brake application time of the behind vehicle and previous air brake application time is longer than required charging time of air brake, a speed of the behind vehicle is greater than an irreducible speed, and any of conditions 1, 2 and 3 is met;
condition 1: the front vehicle and the behind vehicle are all in a deceleration state, the front vehicle stops with current deceleration, the behind vehicle stops with a maximum electric brake force, and the behind vehicle stops at a position exceeding the front vehicle;
condition 2: when the front vehicle is in an acceleration state, and the behind vehicle is in a deceleration state, deceleration of the front vehicle is calculated according to the minimum electric brake, the front vehicle and the behind vehicle both stop with the current deceleration, and the behind vehicle stops at a position exceeding the front vehicle; and
condition 3: the sum of a speed of the behind vehicle and a configured speed is greater than a reference speed, wherein the reference speed is an estimated commanded speed obtained at the end of re-charging of the behind vehicle after venting, and the maximum electric brake is unable to offset deceleration caused by ramp and resistance or an increase of an adjustment speed and a charging speed.

3. The method according to claim 1, **characterized in that** an air brake cancellation condition of the behind vehicle is as follows:

the sum of the speed of the behind vehicle and the configured speed is less than the reference speed, wherein the reference speed is an estimated commanded speed obtained at the end of re-charging of the behind vehicle after venting; and

when the sum of an estimated running distance of the behind vehicle during charging, an estimated running distance of the behind vehicle from venting to stopping and a current position of a following vehicle is less than the sum of a position where the front vehicle is located and an overall estimated running distance of the front vehicle until stopping, the air brake of the behind vehicle is canceled.

4. The method according to claim 1, **characterized in that** the method for cooperative control of automatic train operation further comprises the following steps:

   when the front vehicle and the behind vehicle are high-speed train sets, the sum of a displacement of the behind vehicle during delay, a displacement of the behind vehicle when the maximum electric brake is applied again and a current position of the behind vehicle is less than the sum of the position where the front vehicle is located and a displacement of the front vehicle until stopping when the minimum electric brake is applied, the acceleration of the behind vehicle is able to be improved.

5. The method according to claim 1, **characterized in that** the setting a corresponding variable time headway model according to speed states and air brake states of the front vehicle and the behind vehicles comprises the following steps:

   restricting an inter-vehicle time headway by sections according to the air brake application and cancellation conditions, and designing a basic inter-vehicle time headway between the front vehicle and the behind vehicle as $t_1$;

   when the front vehicle and the behind vehicle are both in a deceleration state, and the behind vehicle is in an air brake canceling state, satisfying that:

$$T_{fb} = ((s_b - s_f) - l_{trainlen} + (fr\_pos\_a - be\_pos\_a)) / v_{behind}$$

   , and when $T_{fb}$ does not exceed $t_1$:
   the inter-vehicle time headway between the front vehicle and the behind vehicle is as follows:

$$T_{fb} = t_1 - ((s_b - s_f) - l_{trainlen} + (fr\_pos\_a - be\_pos\_a)) / v_{behind}$$

   , wherein $T_{fb}$ is the inter-vehicle time headway between the front vehicle and the behind vehicles, $l_{trainlen}$ is a length of the front vehicle, $s_f$ is a current position of the front vehicle, $s_b$ is a current position of the behind vehicle, $fr\_pos\_a$ and $be\_posa$ are running distances of the front vehicle and the behind vehicle until stopping when the front vehicle and the behind vehicle are both under a deceleration condition, respectively, and $v_{behind}$ is a current speed of the behind vehicle;

   when the behind vehicle is in an air brake canceling state, and the front vehicle is in an acceleration state, satisfying that:

$$T_{fb} = ((s_b - s_f) - l_{trainlen} + (fr\_pos\_b - be\_pos\_b)) / v_{behind}$$

   , and when $T_{fb}$ does not exceed $t_1$:
   the inter-vehicle time headway between the front vehicle and the behind vehicle is:

$$T_{fb} = t_1 - ((s_b - s_f) - l_{trainlen} + (fr\_pos\_b - be\_pos\_b)) / v_{behind},$$

   wherein $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, $fr\_pos\_a$ and $be\_pos\_a$ are running distances of the front vehicle and the behind vehicle until stopping when the front vehicle and the behind vehicle are both under a deceleration condition, respectively, and $v_{behind}$ is a current speed of the behind vehicle;

   when the behind vehicle is in an air brake applying state, satisfying that:

$$T_{fb} = ((s_b - s_f) - l_{trainlen} + (fr\_pos\_c - be\_pos\_c)) / v_{behind}$$

, and when $T_{fb}$ does not exceed $t_1$:
the inter-vehicle time headway between the front vehicle and the behind vehicle is:

$$T_{fb} = t_1 - ((s_b - s_f) - l_{trainlen} + (fr\_pos\_c - be\_pos\_c)) / v_{behind}$$ ,

wherein $T_{fb}$ is the inter-vehicle time headway between the front vehicle and the behind vehicle, $l_{trainlen}$ is a length of the front vehicle, $s_f$ is a current position of the front vehicle, $s_b$ is a current position of the behind vehicle, $be\_pos\_c$ is an overall estimated running distance of the behind vehicle in the charging-venting process, $fr\_pos\_c$ is an overall estimated running distance of the front vehicle until the stopping, and $v_{behind}$ is a current speed of the behind vehicle;
when the above conditions are all unsatisfied, reducing the inter-vehicle time headway, and setting the inter-vehicle time headway as $t_2$ in a unified manner; and
when the front vehicle and the behind vehicle are the high-speed train sets, designing the basic inter-vehicle time headway between the front vehicle and the behind vehicle as $t_3$, satisfying that:

$$T_{fb} = ((s_b - s_f) - l_{trainlen} + (fr\_pos\_d - be\_pos\_d)) / v_{behind}$$

, and when $T_{fb}$ does not exceed $t_3$:
the inter-vehicle time headway between the front vehicle and the behind vehicle is $T_{fb} = t_3 - ((s_b - s_f) - l_{trainlen} + (fr\_pos\_d - be\_pos\_d)) / v_{behind}$ , otherwise, reducing the inter-vehicle time headway, and setting the inter-vehicle time headway as $t_4$ in a unified manner, wherein $be\_pos\_d$ is an overall estimated running distance of the behind vehicle in the charging-venting process, and $fr\_pos\_d$ is an overall estimated running distance of the front vehicle until stopping.

6. The method according to claim 1, **characterized in that** the determining a difference between an actual vehicle distance and an ideal vehicle distance according to driving data of the front vehicle and the behind vehicle as well as the variable time headway model comprises the following steps:

establishing a vehicle cooperative following model based on the driving data of the front vehicle, the driving data of the behind vehicle and the variable time headway model, wherein a difference between the actual vehicle distance and the ideal vehicle distance between the front vehicle and the behind vehicle is as follows:

$$\Delta s(t) = s_{real} - d_{safe} = s_f(t) - s_b(t) - T_{fb} v_{behind}(t) - d$$

wherein $s_{real}$ is an actual distance between the front vehicle and the behind vehicle, $d_{safe}$ is a safety distance between the front vehicle and the behind vehicle, $s_f(t)$ is a current position of the front vehicle at time $t$, $s_b(t)$ is a current position of the behind vehicle at time $t$, $T_{fb}$ is the inter-vehicle time headway between the front vehicle and the behind vehicle, $v_{behind}(t)$ is a current speed of the behind vehicle, and $d$ is a distance between the front vehicle and the behind vehicle at rest.

7. The method according to claim 1, **characterized in that** the determining required acceleration of the behind vehicle when the difference tends to 0 comprises the following steps:

selecting a sliding mode switching function:

$$Y = \Delta s(t) + \dot{s}_{real}(t) = s_{real}(t) - T_{fb} v_b(t) - d + \dot{s}_{real}(t)$$

wherein $\Delta s(t)$ is a difference between an actual vehicle distance and an ideal vehicle distance between the front vehicle and the behind vehicle at time $t$, $\dot{s}_{real(t)}$ is a relative speed of the front vehicle and the behind vehicle at time $t$, $s_{real(t)}$ is an actual distance between the behind vehicle and the front vehicle, $T_{fb}$ is the inter-vehicle time headway between the front vehicle and the behind vehicle, $v_b(t)$ is a current speed of the behind vehicle, and $d$ is a distance between the front vehicle and the behind vehicle at rest;

establishing a sliding mode control equation by a constant-speed approaching rate:

$$\dot{Y} + \lambda Y = 0$$

when a sliding mode switching function Y tends to 0, satisfying that the sliding mode control equation is 0, $\Delta s(t)$ $+\dot{s}_{real}(t)\rightarrow 0$,

wherein $\dot{Y}$ represents a derivative of Y, and $\lambda$ represents an approaching speed; and

substituting the sliding mode switching function into the sliding mode control equation to obtain required acceleration $a_{behind}(t)$ of the behind vehicle as follows:

$$a_{behind}(t) = \frac{1}{T_{fb}+1}\left\{(\lambda+1)\dot{s}_{real(t)} + \lambda(s_{real(t)} - d_{safe(t)}) + a_{front}(t)\right\}$$

in the formula, $a_{behind}(t)$ is acceleration of the behind vehicle calculated according to a vehicle cooperative control algorithm, $T_{fb}$ is the inter-vehicle time headway between the front vehicle and the behind vehicle, $\lambda$ represents the approaching speed when the sliding mode switching function Y tends to 0, $\dot{s}_{real(t)}$ is a relative speed of the front vehicle and the behind vehicle at time $t$, $s_{real(t)}$ is an actual distance between the behind vehicle and the front vehicle at time $t$, $d_{safe(t)}$ is a safety distance between the behind vehicle and the front vehicle, and $a_{front}(t)$ is acceleration of the front vehicle at time $t$.

8. The method according to claim 1, **characterized in that** the restricting the required acceleration of the behind vehicle by using commanded acceleration comprises the following steps:

restricting the required acceleration of the behind vehicle by using the commanded acceleration, and when the speed of the behind vehicle after delay exceeds the commanded speed, taking $a_{cmdv}$ as the required acceleration of the behind vehicle,

$$a_{cmdv} = \frac{(v_{cmdv} - v_{front})}{t_{delay}}$$

wherein $v_{cmdv}$ is a commanded speed of the behind vehicle, $v_{front}$ is a speed of the front vehicle, and $t_{delay}$ is a delay of the behind vehicle; and the following restrictions are added to prevent the acceleration calculation of the behind vehicle from being too large or too small:

in order to prevent a situation that the behind vehicle are unable to be started as starting acceleration of the front vehicle is too slow, when the current speed $v_{behind}$ of the behind vehicle is less than 10, taking the acceleration of the front vehicle as the required acceleration of the behind vehicle, meanwhile, decelerating the acceleration of the behind vehicle under a constraint of the commanded speed, when $a_{behind} < a_{cmdv}$, taking $a_{cmdv}$ as the required acceleration of the behind vehicle.

9. The method according to claim 1, **characterized in that** the determining required acceleration of the behind vehicle under a minimum air brake force which is able to ensure deceleration of the behind vehicle when the front vehicle accelerates and the behind vehicle decelerates comprises the following steps:

when $a_{front} > 0$ and *com _ acc (i) + ele _ max_ acc + resis + ramp* $< 0$ :

$$ref\_acc = com\_acc(i) + ele\_\max\_acc + resis + ramp$$

in other cases:

$$ref\_acc = (tv * tv - v_{behind} * v_{behind}) / 2 * (tpos - s_b),$$

wherein $a_{front}$ is the acceleration of the front vehicle, *com_acc(i)* is deceleration corresponding to the minimum air brake force under a condition of decelerating the behind vehicle, *ele max acc* is deceleration corresponding to the maximum electric brake of the behind vehicle, *resis* is deceleration corresponding to basic resistance, *ramp* is deceleration corresponding to a current ramp, tv is a target speed, $v_{behind}$ is the current speed of the behind vehicle, *tpos* is a target position, *ref_acc* is the required acceleration of the behind vehicle under the minimum air brake force which is able to ensure the deceleration of the behind vehicle, and $s_b$ is the current position of the behind vehicle.

10. The method according to any one of claims 1 to 9, **characterized in that** the determining a corresponding traction or brake level according to the required acceleration of the behind vehicle comprises the following steps:

when determining that the behind vehicle needs to accelerate, controlling an output to be a traction level corresponding to the required acceleration of the behind vehicle; and
when determining that the behind vehicle needs to decelerate, and a dynamic brake of the train meets a speed regulation requirement, controlling the output to be a brake level that does not exceed the required acceleration of the behind vehicle.

11. A system for cooperative control of automatic train operation, comprising:

an air brake application and cancellation module, configured to set air brake application or cancellation of a behind vehicle according to a safety distance between a front vehicle and the behind vehicle;
a variable time headway determining module, configured to set a corresponding variable time headway model according to speed states of the front vehicle and the behind vehicle, and air brake states;
a module for determining required acceleration of the behind vehicle, configured to determine a difference between an actual vehicle distance and an ideal vehicle distance according to driving data of the front vehicle and the behind vehicle as well as the variable time headway model; determine required acceleration of the behind vehicle when the difference tends to 0; restrict the required acceleration of the behind vehicle by using commanded acceleration; determine required acceleration of the behind vehicle under a minimum air brake force which is able to ensure deceleration of the behind vehicle when the front vehicle accelerates and the behind vehicle decelerates, and record the required acceleration as first acceleration; determine required acceleration of the behind vehicle corresponding to a corresponding minimum air brake under a condition of no collision, and record the required acceleration as second acceleration; record the smaller of the first acceleration and the second acceleration as acceleration of the behind vehicle under a constraint of an air brake force; and when the required acceleration of the behind vehicle is less than the acceleration of the behind vehicle under the constraint of the air brake force, take the acceleration of the behind vehicle under the constraint of the air brake force as the required acceleration of the behind vehicle; and
a behind vehicle traction brake module, configured to determine a corresponding traction or brake level according to the required acceleration of the behind vehicle.

12. The system for cooperative control of automatic train operation according to claim 11, **characterized in that** the air brake application and cancellation module is specifically configured to:

enable the behind vehicle to start air brake application when an interval between air brake application time of the behind vehicle and previous air brake application time is longer than required charging time of air brake, a speed of the behind vehicle is greater than an irreducible speed, and any of conditions 1, 2 and 3 is met;
condition 1: the front vehicle and the behind vehicle are all in a deceleration state, the front vehicle stops with current deceleration, the behind vehicle stops with a maximum electric brake force, and the behind vehicle stops at a position exceeding the front vehicle;
condition 2: when the front vehicle is in an acceleration state, and the behind vehicle is in a deceleration state, deceleration of the front vehicle is calculated according to the minimum electric brake, the front vehicle and the behind vehicle both stop with current deceleration, and the behind vehicle stops at a position exceeding the front vehicle; and
condition 3: the sum of a speed of the behind vehicle and a configured speed is greater than a reference speed, wherein the reference speed is an estimated commanded speed obtained at the end of re-charging of the behind vehicle after venting, and the maximum electric brake is unable to offset deceleration caused by ramp and resistance or an increase of an adjustment speed and a charging speed;

the sum of the speed of the behind vehicle and the configured speed is less than the reference speed, wherein the reference speed is an estimated commanded speed obtained at the end of re-charging of the behind vehicle after venting; and

when the sum of an estimated running distance of the behind vehicle during charging, an estimated running distance of the behind vehicle from venting to stopping and a current position of a following vehicle is less than the sum of a position where the front vehicle is located and an overall estimated running distance of the front vehicle until stopping, the air brake of the behind vehicle is canceled.

13. A computer storage medium, **characterized in that** a computer executable instruction is stored in the computer storage medium, and the computer executable instruction, when executed, is able to implement the method for cooperative control of automatic train operation according to any one of claims 1 to 10.

FIG. 1

FIG. 2

FIG. 3

FIG. 4

## INTERNATIONAL SEARCH REPORT

| | International application No. |
|---|---|
| | **PCT/CN2023/122256** |

### A. CLASSIFICATION OF SUBJECT MATTER

B61L23/00(2006.01)i

According to International Patent Classification (IPC) or to both national classification and IPC

### B. FIELDS SEARCHED

Minimum documentation searched (classification system followed by classification symbols)

IPC: B61L G08G

Documentation searched other than minimum documentation to the extent that such documents are included in the fields searched

Electronic data base consulted during the international search (name of data base and, where practicable, search terms used)

CNABS, CNTXT, CNKI: 地铁, 机车, 列车, 群组, 时距, 协同, 空气, 制动; VEN, ENTXT, ELSEVIER: subway, locomotive, train, group, time-lapse, coordination, air, brake

### C. DOCUMENTS CONSIDERED TO BE RELEVANT

| Category* | Citation of document, with indication, where appropriate, of the relevant passages | Relevant to claim No. |
|---|---|---|
| PX | CN 116080716 A (BEIJING NATIONAL RAILWAY RESEARCH & DESIGN INSTITUTE OF SIGNAL & COMMUNICATION CO., LTD.) 09 May 2023 (2023-05-09)<br>claims 1-13, description, paragraphs 32-113, and figures 1-4 | 1-13 |
| A | CN 108765926 A (CHONGQING UNIVERSITY) 06 November 2018 (2018-11-06)<br>description, paragraphs 6-40 | 1-13 |
| A | CN 111942433 A (TRAFFIC CONTROL TECHNOLOGY CO., LTD.) 17 November 2020 (2020-11-17)<br>description, paragraphs 5-11 | 1-13 |
| A | CN 115214747 A (ZHUZHOU CRRC TIMES ELECTRIC CO., LTD.) 21 October 2022 (2022-10-21)<br>entire document | 1-13 |
| A | CN 112009526 A (BEIJING NATIONAL RAILWAY RESEARCH & DESIGN INSTITUTE OF SIGNAL & COMMUNICATION CO., LTD.) 01 December 2020 (2020-12-01)<br>entire document | 1-13 |
| A | US 2009125170 A1 (NOFFSINGER JOSEPH FORREST et al.) 14 May 2009 (2009-05-14)<br>entire document | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 December 2023** | **10 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 520 622 A1

**INTERNATIONAL SEARCH REPORT**
Information on patent family members

International application No.

**PCT/CN2023/122256**

| Patent document cited in search report | | | Publication date (day/month/year) | Patent family member(s) | | | Publication date (day/month/year) |
|---|---|---|---|---|---|---|---|
| CN | 116080716 | A | 09 May 2023 | CN | 116080716 | B | 02 June 2023 |
| CN | 108765926 | A | 06 November 2018 | None | | | |
| CN | 111942433 | A | 17 November 2020 | CN | 111942433 | B | 07 June 2022 |
| CN | 115214747 | A | 21 October 2022 | None | | | |
| CN | 112009526 | A | 01 December 2020 | CN | 112009526 | B | 19 February 2021 |
| | | | | WO | 2022077966 | A1 | 21 April 2022 |
| | | | | EP | 4098512A1 | A1 | 07 December 2022 |
| US | 2009125170 | A1 | 14 May 2009 | US | 8180544 | B2 | 15 May 2012 |

Form PCT/ISA/210 (patent family annex) (July 2022)

31